# EUROPEAN PATENT SPECIFICATION

(11) **EP 0 785 819 B1**
(45) Date of publication and mention of the grant of the patent: **10.07.2002**
(21) Application number: 95934905.1
(22) Date of filing: 22.09.1995
(51) Int. Cl.: B01D 53/26

(54) **A METHOD AND AN APPARATUS FOR OPTIMIZING THE YIELD OF A WET AIR DEHUMIDIFIER OR AIR DRIER PROVIDED WITH A REGENERABLE ROTOR, AND A PRESSURE METER APPARATUS FOR USE WITH SUCH AN APPARATUS**
METHODE UND GERÄT ZUM OPTIMALISIEREN DER AUSBEUTE EINER LUFTENTEUCHTUNGSVORRICHTUNG, MIT EINEM REGENERIERBAREN ROTOR UND MIT EINEM INSBESONDERE FÜR EIN DERARTIGES GERÄT GEEIGNETEN DRUCKMESSAPPARAT
PROCEDE ET APPAREIL OPTIMISANT LE RENDEMENT D'UN DESHUMIDIFICATEUR D'AIR POURVU D'UN ROTOR A REGENERATION, ET METRE A PRESSION NOTAMMENT DESTINE A CET APPAREIL

(30) Priority: 10.10.1994 SE 9403431
(43) Date of publication of application: 30.07.1997
(73) Proprietor: CORROVENTA AVFUKTNING AB, 564 35 Bankeryd (SE)
(72) Inventor: CLAESSON, Knut, S-563 92 Gränna (SE)
(74) Representative: Wennborg, Göte
(86) International application number: SE9501083
(87) International publication number: WO9611049

(56) References cited:
- WO-A-90/06165
- US-A- 3 686 832

## Description

### TECHNICAL FIELD

The present invention relates to a method of optimizing the yield of a wet-air dehumidifier or air-drier provided with a regeneratable rotor, and more particularly to a method of the kind defined in the preamble of Claim 1.

The invention also relates to an optimizing apparatus which operates in accordance with the inventive method, and to a pressure meter apparatus for use with such an apparatus.

### BACKGROUND PRIOR ART

WO 90/06165 (Corroventa) discloses a method and a device for drying air with a drier provided with a rotor. This known drier does not have any valves in the outflows and there is no means to measure pressure differences of the flows in different chambers.

In regenerating processes of the kind here under concern the capacity of the dehumidifier is influenced by different factors, such as the power delivered to the rotor through the medium of the heated regenerating air-flow. The more energy delivered, the higher the regeneration capacity up to a certain maximum value. The regeneration capacity does not increase when the supply of energy increases to above this maximum value, but decreases instead.

These facts must be taken into account when manufacturing the equipment. In this regard, the dehumidifier is designed so that there will be delivered to the rotor a regeneration air-flow which corresponds to a maximum energy supply with regard to both volume and temperature.

The speed of rotor rotation is another factor which affects capacity. Each size of rotor has an optimal speed which, among other things, is dependent on
a) the volume of dry air delivered;
b) the volume of wet-air delivered; and
c) the regeneration energy delivered.

This capacity factor is also taken into consideration when manufacturing the dehumidifier.

However, there are a number of other capacity influencing factors that cannot be influenced when manufacturing the equipment. A primary factor in this regard relates to the volume of the air-flows delivered to the rotor to be dried and regenerated thereby. In some individual cases, an optimal value with regard to the magnitude of these flows can be established, it being necessary to determine this value separately in accordance with the conditions that prevail at the site of use.

The wet air exiting from the outlet of the dehumidifier is also discharged to atmosphere through a conduit whose length and diameter will vary in accordance with the conditions at the user site.

The pressure drop in this wet-air conduit will thus vary in accordance with the length and diameter of the conduit.

The wet-air flow also has an optimum value, which, among other things, is related to the fact that the regeneration battery normally delivers constant power, e.g. 1000 W. This raises the temperature of the air to be regenerated to some extent. For instance, an air-flow of 35 m³/h may undergo a temperature increase of 100°C, for instance. When the air-flow is twice this volume, the temperature increase will be 50°C (e.g. from 20°C to 70°C).

In theory, an air volume of half the size would be heated to 200°C. However, an excessively small volume of air would not allow sufficient water to be extracted. The capacity of the dehumidifier is reduced dramatically with reducing wet-air volumes.

Another phenomenon can occur when drying-out a cellar floor that has been damaged by flooding, particularly in the case of temporary installations.

When the volume of wet air exiting from the dehumidifier is excessively small, for instance after the equipment has been in use for some time, it is possible that the dehumidifier will overheat and stop automatically.

This presents the problem of being able to establish or to check that the equipment has been installed correctly and that optimal operation conditions prevail on the instant occasion of use.

It will be evident from the aforegoing that an optimum volume of process air and an optimum volume of regeneration air will impart the following important properties to a dehumidifier or air-drier:
1) Optimum capacity.
2) Operational reliability.

In this regard, it is not possible to determine capacity as a function of wet air volume in conjunction with the manufacture of the equipment. Instead, the capacity is determined in accordance with the conditions that prevail on the user site.

A number of other priorities must be made in conjunction with the use of a dehumidifier.

In some cases, the dehumidifier is used only to dry the air in a room, i.e. to remove a certain number of kilograms of water from a room with each calendar day.

In cases such as these, the dehumidifier is allowed to work with the largest possible air volume, the capacity of the dehumidifier increasing asymptotically towards a maximum value with increasing air volumes. However, the drier the air becomes, the less water that can be absorbed by the sorbent in the dehumidifier per unit of time.

Consequently, in those instances where only a certain amount of water is to be extracted per unit of time, the largest possible volume of air is delivered to the dehumidifier.

In other cases, for instance in the case of military applications where air-dehumidification is applied to prevent corrosion of an armoured tank or an aeroplane, the primary object is not to extract a given quantity of water from a space but to achieve a given quality, i.e. the dry air delivered to the object may contain at most a certain amount of water. In this regard, it is necessary to ensure that the delivered air-flow is reduced to a level at which the air will have a sufficiently low relative humidity.

For instance, in the case of an application of this nature, the dehumidifier can be operated with a dry air-flow of 300 m³/h, therewith removing 2.5 g water from each m³ air. The air entering the dehumidifier has a temperature of 20°C and an 80% relative humidity and thus contains 11.6 g water. Dry air delivered by the dehumidifier contains 2.5 g less water. When the volume of dry air is reduced, e.g. by one-third, substantially less water will be removed with each calendar day.

When proceeding in accordance with the present standpoint of techniques, for instance in a military application where it is important to know the magnitude of the flow departing from a dehumidifier in conjunction with an air-drying process, it is necessary for the operator to perform complicated handling of measuring equipment, including measuring stub-pipes and measuring pipes, among other things, in order to ascertain the magnitudes of the flows concerned.

### OBJECTS OF THE INVENTION

With a starting point from the general facts recited above, a primary object of the present invention is to provide a method and an apparatus of the aforesaid kind which will enable the drying process to be optimized in different individual cases without the need of complicated special measuring equipment.

Another object is to provide a method and an apparatus of the aforesaid kind with which it can be ascertained directly on the drying apparatus whether or not the dry air-flow and the wet-air flow have the desired magnitude and quality.

### SUMMARY OF THE INVENTION

These objects and other objects are fulfilled with an inventive method of the aforesaid kind having the characteristic features set forth in the characterizing clause of the following Claim 1.

The invention is based on the understanding that the air-flow between two spaces in which mutually different pressures prevail will be essentially proportional to the difference in pressures between the two spaces, and that the pressure differences between given chambers can be readily determined by measuring the pressures that prevail in the chambers, therewith obtaining a measurement of the magnitude of the given dry-air and wet-air flows. The magnitude of said flows can be easily controlled with the aid of valves, eg butterfly valves, thereby enabling the drying process to be optimized and also requirements that may be placed on the quality of the drying process to be fulfilled in conjunction therewith.

Thus, it can be ensured that the thermal energy delivered to the dehumidifier can be utilized in the best possible way without requiring the use of complicated auxiliary equipment, while fulfilling quality requirements placed on different applications in individual cases at the same time.

The invention also affords the important advantage of enabling the equipment operator to establish from the beginning that the equipment functions, or will function, in the most effective manner possible without needing to resort to complicated measuring apparatus, and also enables the equipment to run unattended, normally without continuous supervision, until the air-drying process can be interrupted or until the measuring devices indicated that it is necessary to adjust the setting of one or more valves.

Preferred developments of the inventive method are set forth in the following method Claims.

According to another aspect, the invention relates to a dehumidifier having essentially the characteristic features set forth in Claim 5.

Claim 9 defines a pressure meter apparatus which facilitates control and supervision of the dehumidifying process and which can be used to advantage when practicing the method.

### BRIEF DESCRIPTION OF THE DRAWINGS

The invention will now be described with reference to a number of exemplifying embodiments thereof and also with reference to the accompanying drawings.

Figs. 1-6 are diagrams which illustrate the relationship between a number of parameters important to a drying process and a dehumidifier of the aforesaid kind.
Fig. 1 denotes the capacity of the dehumidifier in kg/calendar day as a function of dry air volume;
Fig. 2 denotes the capacity of the dehumidifier in kg/calendar day as a function of wet air volume;
Fig. 3 is a diagram illustrating the capacity of the dehumidifier, Δx g/kg as a function of dry air volume;
Fig. 4 is a diagram illustrating the capacity of the dehumidifier as a function of rotor speed;
Fig. 5 is a diagram of the capacity of the dehumidifier in kg/calendar day as a function of delivered regeneration energy;
Fig. 6 is a diagram which illustrates energy consumption in Kwh/kg as a function of dry air volume;
Fig. 7 is a perspective view of an inventive air dehumidifier, the housing of which is assumed to be made of a transparent material for the sake of illustration, so as to enable the various parts of the dehumidifier to be seen;
Fig. 8 is a vertical section through an air dehumidifier according to Fig. 1; and
Fig. 9 is a sectional view corresponding to Fig. 8 showing an alternative embodiment.

### DESCRIPTION OF PREFERRED EMBODIMENTS

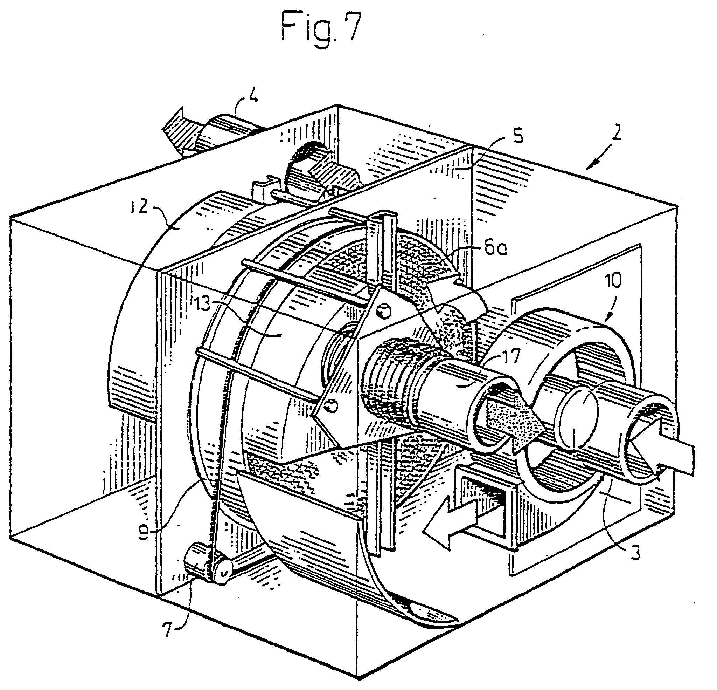

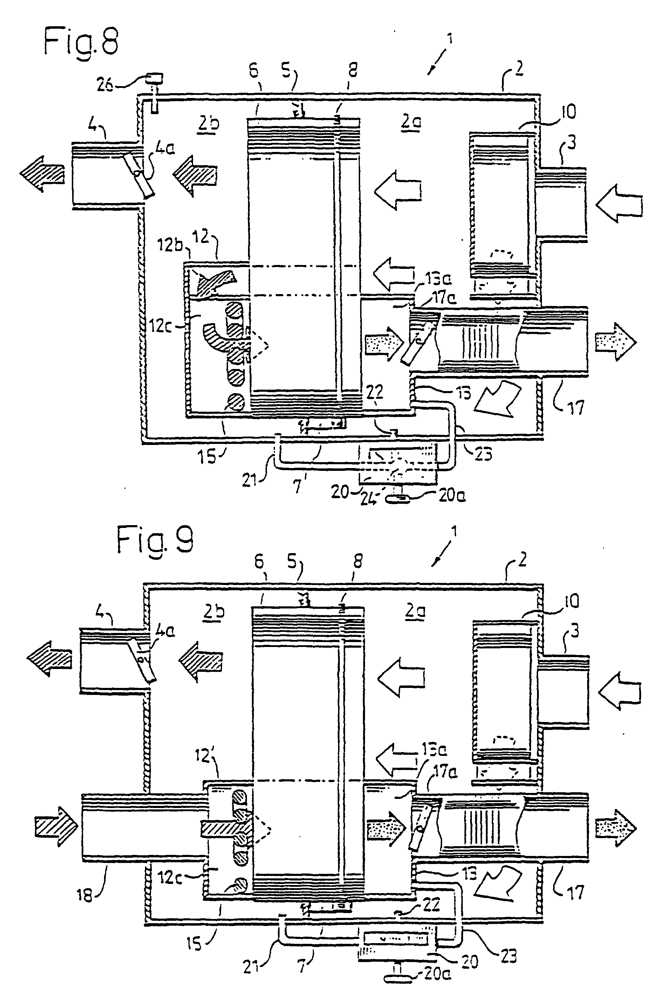

Figs. 7 and 8 illustrate an air dehumidifier 1 comprising a housing or casing 2 provided with an inlet 3 and an outlet 4.

The housing 2 includes a partition wall 5 in which there is provided a circular hole for accommodating a rotor 6, the journal bearings of which have not been shown in the Figures. The rotor is driven by the belt 8 of an electric motor 7, and is provided with an appropriate seal 9 in relation to the partition wall 5.

The rotor 6 includes a large number of passageways 6a of which the walls contain a drying agent, such as silica gel, molecular sieve material or like material, which makes possible almost unlimited regeneration.

Located adjacent the inlet 3 is a centrifugal fan 10 which draws in the wet or moist air to be dehumidified. The fan generates an overpressure in the housing part 2a delimited by the partition wall 5.

As the air passes through the rotor 6, the air is pressurized, demoisturized and preheated, and the major part of this air enters the chamber 2b on the other side of the partition wall 5 and exits through the outlet 4, where it can be used for desired purposes, for instance dry air storage or some other drying process.

A minor portion of the air passing the rotor 6, for instance one-fifth of this air volume, is captured by a hood 12 made of aluminium or some like material and placed closely adjacent the rotor 6 on its low-pressure side. The hood 12 has a circle-sector configuration, with the exception of a part corresponding to the rotor shaft.

The hood 12 is divided into two chambers 12b and 12c by a wall 12a, wherein a similar hood 13 corresponding to the chamber 12c is located on the high-pressure side of the rotor, closely adjacent said rotor and sealed against the same in the housing part 2a.

As before mentioned, part of the air flowing through the rotor is captured by the hood part 12b and deflected through 90° and flows into the chamber 12c through an opening in the wall 12a. Heat-emitting means in the form of electric elements 15 are mounted in the chamber 12c.

The electric element 15 is located close to the rotor 6 and are intended to radiate high-temperature heat onto rotor parts located adjacent the hood 12. The rotor is driven anticlockwise in the housing 2, by the drive arrangement 7, 8.

In addition to the heated air-flow deflected by the hood 12 and returned through the rotor and used for regeneration of the sorption agent, direct radiation heat from the heat-emitting electrical elements 15 serves the same purpose.

Thus, high-temperature thermal energy radiates directly into the rotor, therewith heating the rotor parts located adjacent the hood to a temperature above 250°C, possibly to a temperature of 300°C.

That part of the rotor 6 to which moisture is bound most strongly will therewith undergo the most effective regeneration, essentially as a result of the radiation energy delivered by the electrical elements 15.

However, the air-flow that is preheated during its passage through the rotor and which is deflected and returned through the rotor after being heated by the electrical elements 15 is also necessary. Thus, this air-flow regenerates effectively primarily those parts of the rotor that are located close to its high-pressure side and which are therewith not bound to the same high extent as those parts located adjacent the hood 12, and where additional radiation heat from the electrical element 15 only has a limited effect.

The moist or humid regeneration air is collected in the hood 13 and exited from the housing 2 through a hose 17.

The journal bearings of the rotor are supported by a structure mounted in the partition wall 5. This supporting structure includes, among other things, vertical U-beams 20, one on each side of the wall 5, bolts 21, a plate 22 which supports the rotor bearing (not shown), and bolts 23 which secure the plate 22.

The air-flow generated by the fan 10 is deflected by a curved plate 24.

The housing 2 of the illustrated embodiment may measure 0.4 x 0.4 x 0.4 m and the rotor may rotate at a speed of 25 revolutions per hour.

In the case of a dehumidifier of this construction, a dry air volume of 200 m³/h can be delivered through the outlet 4. In the illustrated case, about one-quarter or more of this air-flow can be captured by the hood 12 and used as regeneration air by passing the same back through the rotor.

Fig. 9 illustrates an embodiment which is a modification of the embodiment illustrated in Figs. 7 and 8 insomuch that none of the original air-flow on the low-pressure side of the rotor 6 is captured and deflected.

Instead, regeneration air is delivered directly from an external source through a conduit 18 connected to a modified hood, which is also referenced 12 in Fig. 9. The regeneration flow may also be preheated by means (not shown) and further heated as it passes through the hood by means of heat-emitting means in the form of electric elements 15 mounted in the hood and functioning to the same end as in the aforedescribed embodiment, i.e. the electric elements 15 are located close to the rotor 6 and are intended to radiate high-temperature heat axially towards parts of the rotor 6 lying close to the hood 12.

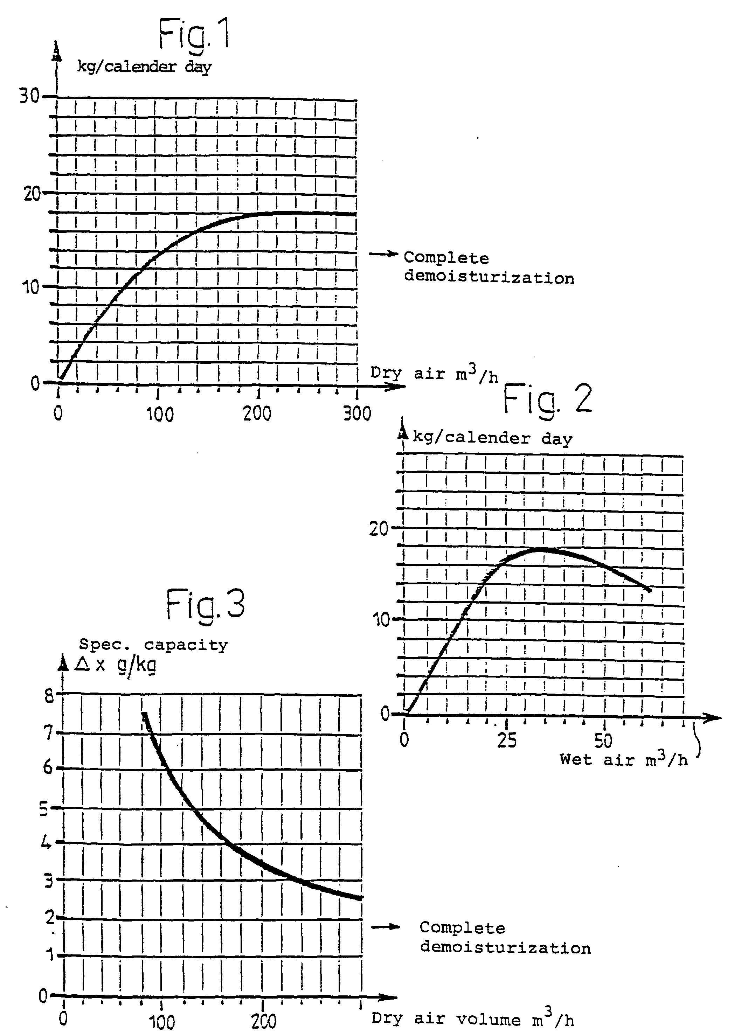

Figs. 1-6 are diagrams which illustrate the relationship between different parameters essential to the dehumidifier shown in Figs. 7-9.

Fig. 1 thus illustrates the capacity of the dehumidifier in kg/calendar day as a function of the volume of dry air delivered. It will be seen from the diagram that with increasing dry air volumes in m³/h, the capacity in kg/calendar day asymptotically approaches a value of about 19 kg water/calendar day. A substantial increase in dry air volume to above 300 m³/h will thus only result in a marginal increase in capacity. Because the curve rises steeply when the dry air volume varies between 0 and 200 m³/h, it is evident that the volume of dry air shall be as large as possible with regard to complete demoisturization of the air. Thus, the person operating the dehumidifier is able to influence this capacity value on the user site.

Fig. 2 is a diagram showing the capacity in kg/calendar day as a function of wet air volume. According to this diagram, the capacity has a maximum value at a wet air volume of about 35 m³/h, after which the capacity diminishes. The wet air volume is dependent on the pressure drop in the wet air channel 17, and in order to obtain the best capacity value, this pressure drop should be adjusted to obtain a wet air volume that corresponds to the maximum capacity value. This parameter can also be influenced by the person using the dehumidifier, for instance by adjusting the pressure drop in the wet air channel, and therewith the wet air volume, to a value which provides maximum capacity.

Fig. 3 illustrates the specific capacity Δx g/kg as a function of dry air volume. It will be seen from the diagram that an increase in the dry air volume will result in a marked decrease in the specific capacity of the dehumidifier. Consequently, it is necessary to regulate the dry air volume in accordance with the type of installation concerned on the user site, so that the relevant capacity value will not become too small.

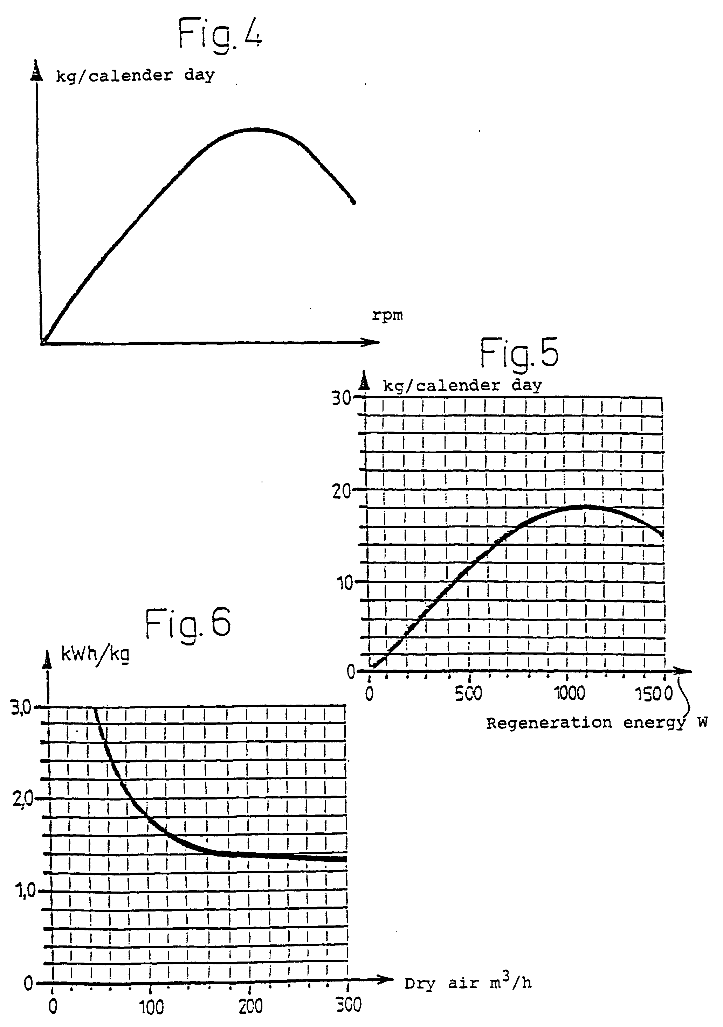

Fig. 4 illustrates the capacity of the dehumidifier as a function of rotor speed. Each rotor size has an optimum rotational speed which, among other things, is contingent on dry air volume, wet air volume and the regeneration energy supplied. Thus, this capacity value can be influenced primarily by the manufacturer. However, in those cases where the rotor speed can be adjusted, the user of the equipment is also able to adjust the rotor speed in different relevant situations, so as to obtain maximum capacity.

Fig. 5 illustrates the capacity of the dehumidifier in kg/calendar day as a function of regeneration energy. It will be seen from the diagram that this capacity has a maximum value with a regeneration energy input of about 1.1 Kw and that a higher energy input results in a capacity decrease. This is because any additional energy supplied cannot be utilized by the regeneration medium in the dehumidifier.

Thus, the manufacturer of the equipment is the person who can primarily influence this capacity value, whereas the user is not able to influence the capacity to any great extent.

Fig. 6 illustrates energy consumption in Kwh/kg as a function of dry air volume. It will be seen from the diagram that energy consumption will fall asymptotically towards a minimum value with increasing dry air volumes. In the case of the illustrated embodiment, this minimum value corresponds to an energy consumption of about 1.3 kWh/kg which is achieved with a dry air volume of about 300 m³/h with total demoisturization of the air. Consequently, a further increase in dry air volume will not have any significant advantage with regard to energy consumption.

Valves 4a and 17a, eg butterfly valves, are mounted respectively in the outlet 4 for dry air from the chamber 2b and in the outlet 17 for moist or humid air from the chamber 13a. These valves can be adjusted from outside the system, so as to regulate the outflows of dry air and wet air respectively. The magnitude of the two flows is determined with the aid of a pressure meter 20, or manometer, which includes a multipath valve 24, as described in more detail below.

The size of the flow through the rotor 6 is proportional to the pressure difference between a point upstream of the rotor and a point downstream thereof, for instance in the chambers 2a and 2b. Correspondingly, the flow of wet air from the chamber 13a through the outlet 17 is proportional to the pressure difference between two points in the chambers 2a and 13a, or the chambers 2b and 13a, or the chambers 12b and 13a, and so on. In the case of the illustrated embodiment, these points have been placed in the chambers 2a and 13a.

This applies to the embodiments according to Figs. 7, 8 and the embodiment according to Fig. 9.

Thus, by recording the pressures in said chambers 2a, 2b and 13a respectively, it is possible to readily determine the pressure differences Δp₁ between the chambers 2a and 2b, and Δp₂ between the chambers 2a and 13a. Thus, in accordance with aforegoing, these pressure differences Δp₁ and Δp₂ are a measurement of the size of the flows in respective discharge conduits 4 and 17. In this regard, the pressure differences Δp₁ and Δp₂ can be disclosed on an instrument 20 which is graduated in some appropriate manner, for instance graduated red, yellow and green regions or in air volumes m³/h at different settings of the indicator.

When the indicator is set to measure the pressure difference Δp₁, the operator is able to read-off the dry air volume from the scale, e.g. graduated in m³/h. The valve 4a can be adjusted when the flow is too small or too large.

The same applies when the instrument is set for registering Δp₂, i.e. the pressure difference between the chambers 2a and 13a, this pressure difference being proportional to the wet-air flow exiting through the outlet conduit 17. In correspondence with the above description of Figs. 1-6, it will be seen that the magnitude of the wet-air flow through the outlet 17 is significant to the quality of the dehumidifying operation in some cases, namely that an excessively large wet-air flow increases the relative humidity of the dry-air flow delivered from the chamber 2b through the outlet 4. When the indicator is located in the "yellow region", the size of the flow is still acceptable, whereas when the indicator is located within the "red region", the flow is too small and the setting of valve 17a must be adjusted.

Thus, a check to ascertain whether or not the dehumidifier is operating at optimum capacity can be easily carried out, and corrections can easily be made when so is not the case.

The pressure meter 20 includes a connection line 21 to the chamber 2b, a connection line 22 to the chamber 2a, and a connection line 23 to the chamber 13a, by means of which the pressure prevailing in respective chambers can be measured. The lines 21, 22 and 23 are connected to a multipath valve 24 having a lever 20a which enables the valve to be adjusted so that said pressure differences Δp₁ and Δp₂ are registered. The indicator of the instrument - indicated in Fig. 9 - is graduated in the aforesaid green, yellow and red regions or in m³/h, and the pressure differences registered by the instrument are thus an indirect measurement of current flow sizes in accordance with the aforegoing.

It lies within the concept of the invention to control the settings of the valve 4a and/or the valve 17a, for instance by means of a computer, in response to a signal delivered by a pressure meter and/or flowmeter of the aforesaid kind, i.e. so that the dehumidifier will be set automatically for work at the optimal capacity values with respect to the conditions prevailing at the user site and with respect to quality requirements.

It also lies within the concept of the invention to provide a pressure meter apparatus of the principle kind referenced 20 in Fig. 8, i.e. to detect the pressures in two spaces with the aid of hoses, where one fluid flow is delivered from one space to the other and where the pressure difference between the spaces is registered as a measurement of the size of flow.

A further development of this pressure meter includes more than two connection lines for registering the pressure in further spaces, these connection lines being connected to a multipath valve which can be set between different positions and which functions to register pressure differences and flow sizes in the additional spaces.

## Claims

1. A method of optimizing the yield of a wet air dehumidifier or air drier (1) provided with a regeneratable rotor (6) and to which process air is delivered through an inlet (3) and pressurized in a first chamber (2a) on one side of the rotor (6) and, subsequent to passing through and being demoisturized in a part of the rotor, departs through an outlet (4) from a second chamber (2b) on the other side of the rotor in the form of dry, warm air, wherein warm regeneration air is delivered to another part of the rotor via a third chamber (12c) which is delimited from the second chamber (2b) on the other side of the rotor, and wherein subsequent to passing through and being generated by this rotor part the air exits as wet air through an outlet (17) from a fourth chamber (13a) delimited from the first chamber (2a) on the first side of the rotor, **characterized in that** the flow of dry air exiting from the second chamber (2b) and the wet air exiting from the fourth chamber (13a) are regulated by means of valves (4a; 17a) from respective chambers; **in that** the pressures of the flows in different chambers are measured; and **in that** the pressure difference between selected chambers are sensed or calculated for the purpose of determining the setting of respective valves (4a; 17a) and therewith the magnitudes of the departing dry air and wet-air flows.

2. A method according to Claim 1, **characterized by** registering said pressure differences consecutively with the aid of one and the same pressure meter (20), which includes a multipath valve that can be set between different positions for carrying out said consecutive measuring operations, for instance in the aforesaid chambers.

3. A method according to Claim 1 or Claim 2, **characterized by** sensing the pressure difference between the first and the second chamber (2a; 2b) and between the first and the fourth chamber (2a; 13a).

4. A method according to any of Claims 1 to 3, **characterized by** setting the valves (4a; 17a) automatically through the medium of a computer in response to registered pressure differences in the different chambers (2a; 2b; 13a).

5. An apparatus for optimizing the yield of a dehumidifier or wet air drier (1) provided with a regeneratable rotor, wherein the apparatus includes
a) a process air inlet (3);
b) a fan (10) mounted in a first chamber (2a) on one side of the rotor (6);
c) a second chamber (2b) on the other side of the rotor;
d) an outlet (4) for discharging a dry air-flow from said other chamber (2b);
e) means (12; 15) for separating and heating regeneration air flowing to a part of the other side of the rotor;
f) a third chamber (12c) located on said other side of the rotor and delimited from said second chamber (2b);
g) an outlet (17) for a wet-air flow via a fourth chamber (13a) located on the first side of the rotor and delimited from the first chamber (2a),
**characterized in that** the apparatus further includes
h) adjustable valves (4a; 17a) located in or adjacent to respective outlets (4; 17) from the second and the fourth chamber respectively;
i) means (20-24) for registering the pressures in different chambers;
j) means for registering the pressure differences between different chambers as a measurement of the dry and wet-air flows departing respectively from two or more of the chambers; and
k) means for adjusting the setting of the valves (4a; 17a) in accordance with the registered values of said pressure differences and therewith said exiting flows.

6. An apparatus as claimed in Claim 5, **characterized by** a means (20-24) for registering the pressures in the first, the second and the fourth chamber (2a; 13a).

7. An apparatus as claimed in Claim 5 or Claim 6, **characterized by** means for registering the pressure differences between the first and the second chamber (2a; 2b) and between the first and the fourth chamber (2a; 13a).

8. An apparatus according to any of Claims 5-7, **characterized by** means for adjusting the setting of the valves (4a; 17a) in accordance with the registered values of pressure differences and/or flow magnitudes.

9. A pressure meter apparatus for use with the apparatus according to any of Claims 6-8, comprising:
- multiple line means (21, 22, 23) for insertion into two or more spaces, wherein each of two of said spaces comprises an outlet valve (4a; 17a),
- a multipath valve (24) connected to said line means (21, 22, 23) for registering the pressure in said two or more spaces;
- said multipath valve (24) comprising means (20a) for calculating or recording the pressure difference between two or more of said spaces, wherein the indicated pressure difference or pressure differences is/are taken as a measurement of fluid flow between said spaces and
- means to control the setting of the outlet valves (4a; 17a) on the basis of said measurement.

## Patentansprüche

1. Eine Methode zum Optimieren des Ertrages eines Feuchtluftentfeuchters oder Lufttrockners (1), der versehen ist mit einem regenerierbarem Rotor (6), und zu welchem Prozessluft durch einen Einlass (3) befördert wird und in einer ersten Kammer (2a) auf einer Seite des Rotors (6) unter Druck gesetzt wird und, dem Durchtritt durch und der Entfeuchtung in einem Teil des Rotors nachfolgend, durch einen Auslass (4) von einer zweiten Kammer (2b) auf der anderen Seite des Rotors in der Form von trockner, warmer Luft abgeht, wobei warme Regenerationsluft zu einem anderen Teil des Rotors durch eine dritte Kammer (12c) befördert wird, welche von der zweiten Kammer (2b) auf der anderen Seite des Rotors begrenzt wird, und wobei nachfolgend dem Durchtritt durch und der Generierung durch dieses Rotorteil die Luft als Feuchtluft durch einen Auslass (17) von einer vierten Kammer (13a) austritt, welche von der ersten Kammer (2a) auf der ersten Seite des Rotors begrenzt wird, **dadurch gekennzeichnet, dass** der Strom an trockener Luft, die von der zweiten Kammer (2b) austritt und die Feuchtluft, die von der vierten Kammer (13a) austritt, reguliert werden mittels Ventilen (4a; 17a) von entsprechenden Kammern, dass die Drücke der Ströme in verschiedenen Kammern gemessen werden, und dass die Druckdifferenz zwischen ausgewählten Kammern abgetastet oder berechnet werden zum Zwecke der Bestimmung der Einstellung der entsprechenden Ventile (4a; 17a), und damit das Ausmaß der abgehenden Trockenluftund Feuchtluftströme.

2. Ein Verfahren gemäß Anspruch 1, **gekennzeichnet durch** registrieren der Druckdifferenzen aufeinander folgend mit der Hilfe von ein und dem selben Druckmessgerät (20), welches ein Vielwegventil beinhaltet, das eingestellt werden kann zwischen verschiedenen Positionen zur Durchführung der aufeinander folgenden Messoperationen, z.B. in den vorbenannten Kammern.

3. Ein Verfahren gemäß Anspruch 1 oder Anspruch 2, **gekennzeichnet durch** Abtasten der Druckdifferenz zwischen der ersten und der zweiten Kammer (2a; 2b) und zwischen der ersten und der vierten Kammer (2a; 13a).

4. Ein Verfahren gemäß irgendeinem der Ansprüche 1 bis 3, **gekennzeichnet durch** automatisches Einstellen der Ventile (4a; 17a) mit Hilfe eines Computers als Reaktion auf registrierte Druckdifferenzen in den verschiedenen Kammern (2a; 2b; 13a).

5. Ein Apparat zum Optimieren des Ertrages eines Entfeuchters oder Feuchtlufttrockners (1), welcher versehen ist mit einem regenerierbaren Rotor, wobei der Apparat beinhaltet
a) einen Prozesslufteinlass (3);
b) ein Gebläse (10), das in einer ersten Kammer (2a) auf einer Seite des Rotors (6) montiert ist;
c) eine zweite Kammer (2b) auf der anderen Seite des Rotors;
d) einen Auslass (4) zum Ausstoßen eines trocknen Luftstromes von der anderen Kammer (2b);
e) Mittel (12; 15) zum Trennen und Aufheißen der Regenerationsluft, welche zu einem Teil von der anderen Seite des Rotors strömt;
f) eine dritte Kammer (12c), welche auf der anderen Seite des Rotors angeordnet ist und von der zweiten Kammer (2b) begrenzt wird;
g) einen Auslass (17) für einen Feuchtluftstrom durch eine vierte Kammer (13a), welche auf der ersten Seite des Rotors angeordnet ist und von der ersten Kammer (2a) begrenzt wird,
**dadurch gekennzeichnet, dass** der Apparat weiter beinhaltet
h) einstellbare Ventile (4a; 17a), die in- oder angrenzend an entsprechenden Auslässen (4; 17) jeweils von der zweiten und der vierten Kammer angeordnet sind;
i) Mittel (20-24) zum Registrieren der Drücke in verschiedenen Kammern;
j) Mittel zum Registrieren der Druckdifferenzen zwischen verschiedenen Kammern als eine Messung der Trocken- und Feuchtluftströme, welche jeweils von zwei oder mehreren der Kammern abgehen; und
k) Mittel zum Einstellen der Einstellung der Ventile (4a; 17a) in Übereinstimmung mit den registrierten Werten der Druckdifferenzen, und damit den austretenden Strömen.

6. Ein Apparat gemäß Anspruch 5, **gekennzeichnet durch** ein Mittel (20-24) zum Registrieren der Drücke in der ersten, der zweiten und der vierten Kammer (2a; 13a).

7. Ein Apparat gemäß Anspruch 5 oder Anspruch 6, **gekennzeichnet durch** Mittel zum Registrieren der Druckdifferenzen zwischen der ersten und der zweiten Kammer (2a; 2b) und zwischen der ersten und der vierten Kammer (2a; 13a).

8. Ein Apparat gemäß irgendeinem der Ansprüche 5-7, **gekennzeichnet durch** Mittel zum Einstellen der Einstellung der Ventile (4a; 17a) in Übereinstimmung mit den registrierten Werten der Druckdifferenzen und/oder Stromausmaße.

9. Ein Druckmessapparat zur Verwendung mit dem Apparat gemäß irgendeinem der Ansprüche 6-8, umfassend:
- mehrere Leitungsmittel (21, 22, 23) zur Einführung in zwei oder mehreren Räumen, wobei jeder der zwei der Räume ein Auslassventil (4a; 17a) umfasst,
- ein Vielwegventil (24), welches verbunden ist mit den Leitungsmitteln (21, 22, 23) zum Registrieren des Druckes in den zwei oder mehreren Räumen;
- wobei das Vielwegventil (24) Mittel (20a) umfasst zur Berechnung oder Aufzeichnung der Druckdifferenz zwischen zwei oder mehreren der Räume, wobei die angezeigte Druckdifferenz oder Druckdifferenzen als ein Messwert des Fluidstromes zwischen den Räumen genommen wird, und
- Mittel, um die Einstellung der Auslassventile (4a; 17a) auf Grundlage der Messung zu kontrollieren.

## Revendications

1. Un procédé pour optimiser le rendement d'un déshumidificateur d'air humide ou d'un séchoir d'air (1) pourvu d'un rotor régénérable (6) et auquel de l'air à traiter est amené au travers d'une entrée (3) et pressurisé dans une première chambre (2a) d'un côté du rotor (6) et, après traversée et déshumidification dans une partie du rotor, s'échappe par une sortie (4) depuis une deuxième chambre (2b) de l'autre côté du rotor sous forme d'air sec chaud, où de l'air chaud de régénération est apporté à une autre partie du rotor via une troisième chambre (12c) qui est distincte de la deuxième chambre (2b) de l'autre côté du rotor, et où, après traversée et production par cette partie du rotor, l'air sort sous forme d'air humide au travers d'une sortie (17) depuis une quatrième chambre distincte de la première chambre du premier côté du rotor, **caractérisé en ce que** le débit d'air sec sortant de la deuxième chambre (2b) et d'air humide sortant de la quatrième chambre (13a) sont régulés au moyen de vannes (4a ; 17a) depuis les chambres respectives ; **en ce que** les pressions des débits dans différentes chambres sont mesurées ; et **en ce que** les différences de pression entre les chambres choisies sont détectées ou calculées aux fins de la détermination du positionnement des vannes respectives (4a ; 17a) et par là même des grandeurs des débits sortants d'air sec et d'air humide.

2. Un procédé selon la revendication 1, **caractérisé par** l'enregistrement desdites différences de pression consécutivement à l'aide d'un seul et même manomètre (20), qui comprend une vanne multivoie qui peut être positionnée sur différentes positions pour effectuer lesdites opérations consécutives de mesure, par exemple dans les chambres précitées.

3. Un procédé selon la revendication 1 ou la revendication 2, **caractérisé par** la détection de la différence de pression entre la première et la deuxième chambre (2a ; 2b) et entre la première et la quatrième chambre (2a; 13a).

4. Un procédé selon l'une des revendications 1 à 3, **caractérisé par** le positionnement des vannes (4a ; 17a) automatiquement par l'entremise d'un calculateur en réponse à des différences de pression enregistrées dans les différentes chambres (2a ; 2b ; 13a).

5. Un dispositif pour optimiser le rendement d'un déshumidificateur ou d'un séchoir d'air humide (1) pourvu d'un rotor régénérable, où le dispositif comprend :
a) une entrée d'air à traiter (3) ;
b) un ventilateur (10) monté dans une première chambre (2a) d'un côté du rotor (6) ;
c) une deuxième chambre (2b) de l'autre côté du rotor ;
d) une sortie (4) pour l'échappement d'un débit d'air sec depuis ladite autre chambre (2b) ;
e) des moyens (12 ; 15) pour séparer et chauffer de l'air de régénération s'écoulant vers une partie de l'autre côté du rotor ;
f) une troisième chambre (12c) située sur ledit autre côté du rotor et distincte de la seconde chambre (2b) ;
g) une sortie (17) pour un débit d'air humide via une quatrième chambre (13a) située du premier côté du rotor et distincte de la première chambre (2a),
**caractérisé en ce que** le dispositif comprend en outre :
h) des vannes ajustables (4a ; 17a) situées dans les, ou adjacentes aux, sorties respectives (4 ; 17) depuis la deuxième et la quatrième chambre respectivement ;
i) des moyens (20-24) pour enregistrer les pressions dans les différentes chambres ;
j) des moyens pour enregistrer les différences de pression entre les différentes chambres comme mesure des débits d'air sec et humide s'échappant respectivement de deux, ou plus, des chambres ;
k) des moyens pour ajuster le positionnement des vannes (4a ; 17a) conformément aux valeurs enregistrées desdites différences de pression et par là même des débits sortants.

6. Un dispositif selon la revendication 5, **caractérisé par** un moyen (20-24) pour enregistrer les pressions dans la première, le deuxième et la quatrième chambres (2a ; 13a).

7. Un dispositif selon la revendication 5 ou la revendication 6, **caractérisé par** des moyens pour enregistrer les différences de pression'entre la première et la deuxième chambre (2a ; 2b) et entre la première et la quatrième chambre (2a ; 13a).

8. Un procédé selon l'une des revendications 5 à 7, **caractérisé par** des moyens pour ajuster le positionnement des vannes (4a ; 17a) conformément aux valeurs enregistrées des différences de pression et/ou des grandeurs d'écoulement.

9. Un dispositif manométrique utilisable avec le dispositif selon l'une des revendications 6 à 8, comprenant :
- des moyens de ligne multiple (21, 22, 23) pour insertion dans deux volumes ou plus, où chacun de deux desdits volumes comprend une vanne de sortie (4a ; 17a) ;
- une vanne multivoie (24) reliée auxdits moyens de ligne (21, 22, 23) pour enregistrer la pression dans lesdits deux volumes ou plus ;
- ladite vanne multivoie (24) comprenant des moyens (20a) pour calculer ou enregistrer la différence de pression entre deux ou plus desdits volumes, où la différence de pression ou les différences de pression indiquée(s) est/sont prise(s) comme mesure du débit de fluide entre lesdits espaces, et
- des moyens pour commander le positionnement des vannes de sortie (4a ; 17a) sur la base de ladite mesure.
